# EUROPÄISCHE PATENTSCHRIFT

(11) **EP 0 700 706 B1**
(45) Veröffentlichungstag und Bekanntmachung des Hinweises auf die Patenterteilung: **03.03.1999**
(21) Anmeldenummer: 95113295.0
(22) Anmeldetag: 24.08.1995
(51) Int. Cl.: B01D 15/08

(54) **Niederdruckchromatographiesäule mit automatisch bewegbarem Deckel**
Low pressure chromotagraphy column with automatic movable lid
Colonne de chromatographie basse pression avec couvercle automatiquement déplaçable

(30) Priorität: 06.09.1994 DE 4431662
(43) Veröffentlichungstag der Anmeldung: 13.03.1996
(73) Patentinhaber: HOECHST AKTIENGESELLSCHAFT, 65929 Frankfurt am Main (DE)
(72) Erfinder: Günther, Joachim, Dl., D-67655 Kaiserslautern (DE); Krause, Benrhard, D-65931 Frankfurt (DE); Mader, Gernot, Dl., D-65779 Kelkheim (DE); Sittig, Wolfgang, Dl., D-65719 Hofheim (DE); Itter, Klaus, D-65929 Frankfurt (DE); Simon, Klaus-Jürgen, D-65779 Kelkheim (DE)

(56) Entgegenhaltungen:
- EP-A- 0 008 921
- EP-A- 0 330 503
- DE-A- 1 767 790
- US-A- 4 891 133
- US-A- 5 324 426

## Beschreibung

Die Erfindung betrifft eine Niederdruckchromatographiesäule mit einem Durchmesser größer als 30 cm.
Niederdruckchromatographiesäulen obengenannter Art sind bekannt. Sie bestehen im wesentlichen aus einem senkrecht stehenden Zylinder, einer Bodenplatte mit Auslauf, einer über der Bodenplatte angeordneten unteren Fritte, einer oberen Fritte und einem als beweglichen Kolben ausgebildeten Deckel mit Zulauf, wobei die obere Fritte an der Unterseite dieses Kolbens befestigt ist.

Derartige Niederdruckchromatographiesäulen für Drücke bis 10 bar werden u.a. in Verfahren zur Reinigung von Humaninsulin und dessen Vorstufen eingesetzt, wobei in einem von mehreren Verfahrensschritten die zu reinigende flüssige Phase durch den Zulauf in die Niederdruckchromatographiesäule einfließt, durch die obere Fritte dringt, auf den Weg nach unten durch eine Packung, die sich zwischen der unteren und der oberen Fritte befindet, gereinigt wird und dann durch die untere Fritte und den Auslauf die Niederdruckchromatographiesäule verläßt.

Wichtig für einen guten Reinigungseffekt ist dabei, daß die Packung, die vorzugsweise aus einem Gelmaterial besteht, homogen, fest und möglichst frei von blasenförmigen Hohlräumen (z.B. Lufteinschlüsse) zwischen den Fritten eingeschlossen ist. Zur sachgemäßen Herstellung einer solchen Packung wird das Packungsmaterial in einer Flüssigkeit suspendiert und diese Suspension durch die oben offene Niederdruckchromatographiesäule auf die untere Fritte aufgegeben. Nach Absetzen des Gelmaterials wird der verfahrbare Kolben manuell unter Zuhilfenahme von Hebezeug oder Gewindestangen möglichst waagerecht in der Chromatographiesäule herabgelassen, bis die untere Fritte das Gelmaterial berührt. Sodann wird zusätzliche Flüssigkeit aufgegeben; dieser Flüssigkeitsstrom führt zu einer weiteren Verdichtung. Die Flüssigkeit wird unten abgesaugt bis die erwünschte Packungshöhe erreicht ist. Dieser Vorgang ist äußerst zeitraubend, arbeits- und personalintensiv, weil bei zunehmendem Säulendurchmesser, d.h. innerer Durchmesser des Zylinders ≥ 30 cm, die Führung des Kolbens immer schlechter wird (verkanten), was sich negativ auf das Packen und das Betreiben der Säule auswirkt.

Zudem ist aus den Erfahrungen mit Hochdruckchromatographiesäulen bekannt, daß sich die Packung inhomogen ausbildet, wenn die vorstehend beschriebene Herstellung zu lange dauert. Die Folge ist ein schlechter Reinigungseffekt.

Für diese Nachteile will die Erfindung Abhilfe schaffen.

Erfindungsgemäß geschieht dies durch die Merkmale des Anspruchs 1.

Weitere Ausgestaltungen der Erfindung ergeben sich aus den Ansprüchen 2 bis 7.

Die Erfindung eignet sich zur Reinigung von Insulin und von dessen Vorstufen.

Die mit ihr erzielbaren Vorteile äußern sich zum einen in einer einfachen und schnellen Herstellung der Packung, zum anderen zeigte sich überraschenderweise, daß mit einer solchen Packung reinere Produkte gewonnen werden können als bisher.

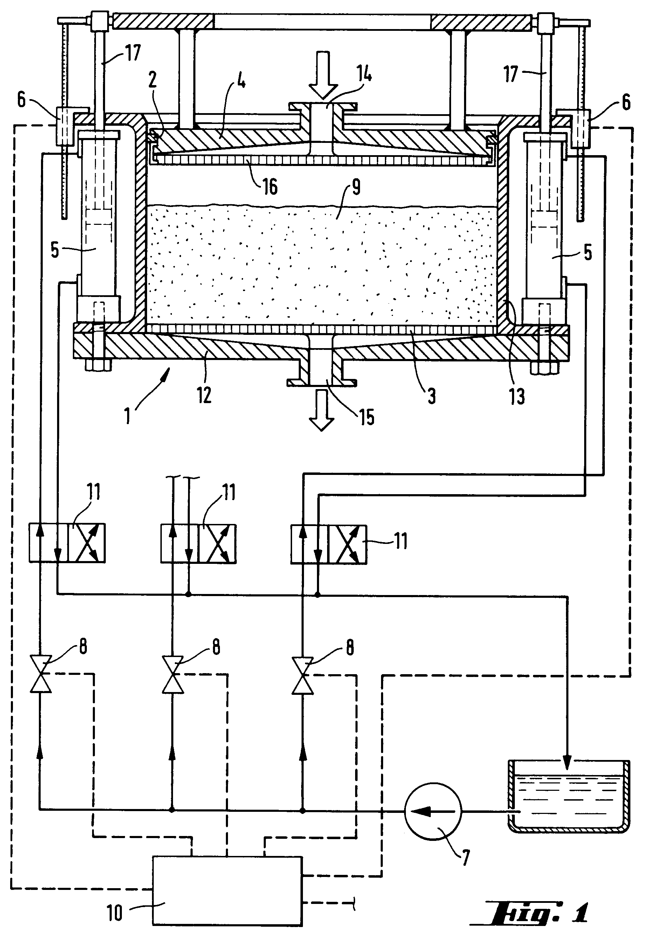

Im folgenden wird ein Ausführungsbeispiel der Erfindung anhand der Zeichnung in den Figuren 1 bis 3 näher beschrieben.
Die Figur 1 zeigt einen Querschnitt durch eine Niederdruckchromatographiesäule mit zugehöriger Steuereinheit und Verschaltung.
Figur 2 zeigt einen eingebauten Druckaufnehmer und Figur 3 ein eingebautes Endoskop jeweils im Querschnitt.

Die Niederdruckchromatographiesäule 1 besteht im wesentlichen aus einem senkrecht stehenden Zylinder 13, einer Bodenplatte 12 mit Ablauf 15, einer unteren Fritte 3, die direkt über der Bodenplatte 12 angeordnet ist, einer oberen Fritte 16, die an der Unterseite eines als beweglicher Kolben 4 ausgebildeten Deckels befestigt ist. Der Spalt zwischen Kolben 4 und Zylinder 13 wird durch eine Dichtung 2 abgedichtet. Der Kolben 4 ist mit einem Zulauf 14 versehen.

Zwischen oberer Fritte 16 und unterer Fritte 3 befindet sich eine Packung 9, vorzugsweise aus einem Gel, die möglichst homogen, frei von blasenförmigen Hohlräumen fest zwischen den beiden Fritten 16, 3 eingeschlossen sein soll. Um dies in möglichst kurzer Zeit zu erreichen, sind außen an der Säule drei Hydraulikzylinder 5 angebracht, mit deren Hilfe über Kolbenstangen 17, die mit dem Kolben 4 verbunden sind, der Kolben 4 vertikal nach oben oder nach unten bewegt werden kann, gegebenenfalls über ein Hydraulikaggregat 7 mit ansteuerbaren Drosselventilen 8 und Umsteuerventilen 11.

Zur Ansteuerung der Drosselventile 8 dient eine Steuereinheit 10, an deren Ausgänge die Drosselventile 8 angeschlossen sind.

Die Eingänge der Steuereinheit 10 sind mit Signalgebern 6 elektrisch verbunden, die insbesondere als Wegaufnehmer ausgeführt sind und von denen jeweils einer an einer Kolbenstange 17 der Hydraulikzylinder 5 angebracht ist. Mit Hilfe solcher Signalgeber wird die vertikale Position der betreffenden Kolbenstange 17 gemessen und als elektrisches Signal an die Steuereinheit 10 gemeldet. Die Gesamtheit der Positionen der einzelnen Kolbenstangen 17 kennzeichnet die vertikale Position und die horizontale Lage des Kolbens 4.

Je nach Position und Lage des Kolbens 4 betätigt die Steuereinheit 10 über die Drosselventile 8 die Hydraulikzylinder 5 in der Weise, daß der Kolben 4 waagrecht und mit einer vorwählbaren Geschwindigkeit nach unten geführt wird. Durch Betätigung der Umsteuerventile 11 kann der Kolben in entsprechender Weise nach oben geführt werden. Die Betätigung der Umsteuerventile 11 erfolgt manuell, eine Automatisierung dieses Vorgangs ist möglich.

In einer weiteren Ausgestaltung der Erfindung ist anstelle der oberen die untere Bodenplatte 12 als ein beweglicher Kolben ausgebildet und mit Elementen 5 zum Heben oder Senken der Bodenplatte 12 verbunden.

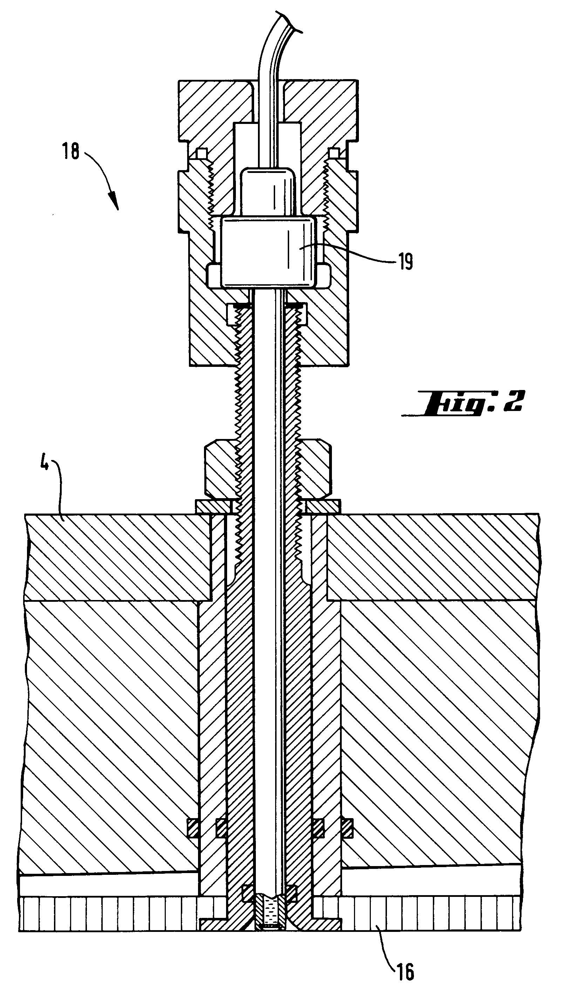

In einer besonderen Ausgestaltung ist in den Kolben 4 ein Druckaufnehmer 18 mit einem zylinderförmigen Drucksensor 19 (Fig. 2) eingebaut, mit dessen Hilfe es möglich ist, den Druck direkt über dem Gelmaterial zu messen und an die Steuereinheit 10 weiterzuleiten.

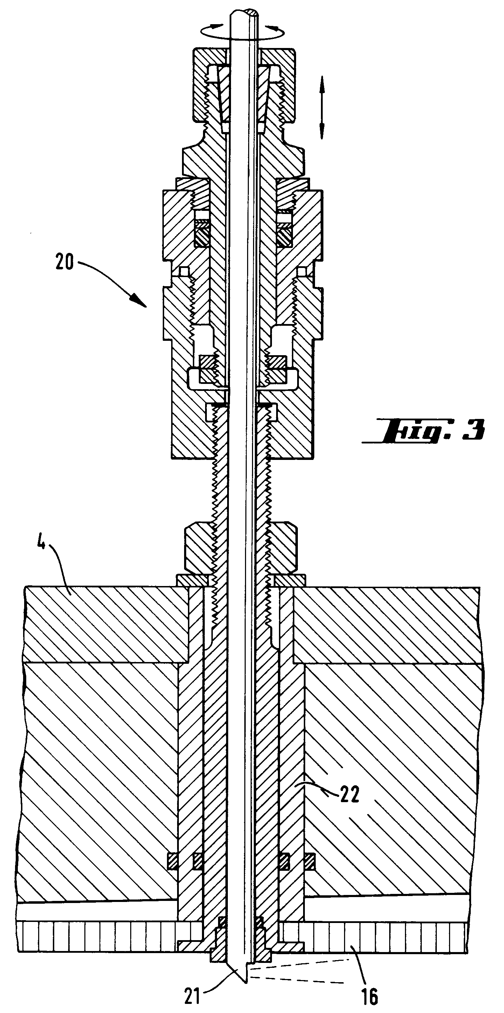

Der innere Durchmesser des Drucksensors 19 endet bündig zur Oberfläche der Fritte 16. Die Querschnittsfläche sollte so klein wie möglich gehalten werden, um die durchströmte Fläche der Fritte 16 nicht unnötig zu verkleinern. Weiter ist es vorteilhaft, den Kolben 4 mit einer Beobachtungseinrichtung 20, vorzugsweise mit einem Endoskop 21 (Figur 3) auszurüsten, da dies den Vorteil hat, daß der gesamte Verfahrbereich des Kolbens 4 überwacht werden kann.

Zudem gibt es Gelmaterialien, die nach Aufgabe entsprechender Medien "atmen". So läßt sich auch bei diesen Gelmaterialien der Abstand Gel/Frittenunterseite einsehen bzw. genau einstellen.

Um eine Beobachtung zu ermöglichen, wird der Kolben 4 der Niedrdruckchromatographiesäule 1 mit einer Aufnahme 22 versehen, die es zuläßt, daß ein bis unter die Fritte 16 eingebrachtes Endoskop 21 um 360° dehnbar und in der Höhe verstellbar ist. Das Endoskop 21 mit 90° Blickwinkel ermöglicht es, den Abstand zwischen Gelmaterial und Frittenunterseite exakt einzustellen.

Wichtig ist hierbei auch, daß durch die geringe Querschnittsfläche der Endoskopaufnahme der Aufgabefluß nicht übermäßig gestört wird.

## Patentansprüche

1. Niederdruckchromatographiesäule (1) mit einem Durchmesser größer als 30 cm, bestehend aus einem senkrecht stehenden Zylinder (13) mit einer Bodenplatte (12), einer unteren Fritte (3), die über der Bodenplatte (12) angeordnet ist, einer oberen Fritte (16), die an der Unterseite eines Deckels befestigt ist, wobei entweder die Bodenplatte (12) oder der Deckel als beweglicher Kolben (4) ausgebildet sind, wobei die Niederdruckchromatographiesäule (1) außen drei ansteuerbare Elemente (5) zum Heben oder Senken des Kolbens (4) aufweist, die mit dem Kolben (4) verbunden sind,
die ansteuerbaren Elemente (5) mit Signalgebern (6) zur Bestimmung von vertikaler Position und horizontaler Lage des Kolbens (4) ausgerüstet sind und
die Signalgeber (6) mit einer Steuereinheit (10) für die ansteuerbaren Elemente (5) elektrisch verbunden sind.

2. Niederdruckchromatographiesäule gemäß Anspruch 1, dadurch gekennzeichnet, daß die Elemente (5) zum Heben oder Senken des Kolbens (4) Hydraulikzylinder sind.

3. Niederdruckchromatographiesäule gemäß Anspruch 1, dadurch gekennzeichnet, daß die Elemente (5) zum Heben oder Senken des Kolbens (4) Pneumatikzylinder sind.

4. Niederdruckchromatographiesäule nach Anspruch 1, dadurch gekennzeichnet, daß die Elemente (5) zum Heben oder Senken des Kolbens (4) elektromotorisch betreibbare Gewindespindeln sind.

5. Niederdruckchromatographiesäule gemäß einem der Ansprüche 2 bis 4, dadurch gekennzeichnet, daß die Signalgeber (6) Wegaufnehmer sind.

6. Niederdruckchromatographiesäule nach Anspruch 1, dadurch gekennzeichnet, daß die Niederdruckchromatographiesäule (1) mit einem Druckaufnehmer (18) zur Bestimmung des Druckes im Zylinder (13) ausgerüstet ist und daß dieser Druckaufnehmer (18) mit der Steuereinheit (10) elektrisch verbunden ist.

7. Niederdruckchromatographiesäule nach Ansoruch 1, dadurch gekennzeichnet, daß der Kolben (4) mit einer Beobachtungseinrichtung (20) ausgerüstet ist.

8. Verwendung einer Niederdruckchromatographiesäule nach Anspruch 1 zur Reinigung von Insulin oder dessen Vorstufen.

## Claims

1. A low-pressure chromatography column (1) having a diameter of more than 30 cm, consisting of a vertical cylinder (13) having a base plate (12), a lower sintered disk (3) which is arranged above the base plate (12), an upper sintered disk (16) which is fastened to the underside of a lid, either the base plate (12) or the lid being designed as a mobile plunger (4), in which arrangement the low-pressure chromatography column (1) has on the outside three controllable elements (5) for raising or lowering the plunger (4), which are connected to the plunger (4), the controllable elements (5) are equipped with sensors (6) for determining the vertical position and horizontal placement of the plunger (4), and the sensors (6) are electrically connected to a control unit (10) for the controllable elements (5).

2. The low-pressure chromatography column as claimed in claim 1, wherein the elements (5) for raising or lowering the plunger (4) are hydraulic cylinders.

3. The low-pressure chromatography column as claimed in claim 1, wherein the elements (5) for raising or lowering the plunger (4) are pneumatic cylinders.

4. The low-pressure chromatography column as claimed in claim 1, wherein the elements (5) for raising or lowering the plunger (4) are threaded spindles that can be operated by an electric motor.

5. The low-pressure chromatography column as claimed in one of claims 2 to 4, wherein the sensors (6) are displacement sensors.

6. The low-pressure chromatography column as claimed in claim 1, wherein the low-pressure chromatography column (1) is equipped with a pressure pick-up (18) for determining the pressure in the cylinder (13), and wherein this pressure pick-up (18) is electrically connected to the control unit (10).

7. The low-pressure chromatography column as claimed in claim 1, wherein the plunger (4) is equipped with an observation device (20).

8. The use of a low-pressure chromatography column as claimed in claim 1 for purifying insulin or precursors thereof.

## Revendications

1. Colonne chromatographique à basse pression (1) ayant un diamètre supérieur à 30 cm, constituée d'un cylindre vertical (13) ayant une plaque de fond (12), une fritte inférieure (3), qui est agencée sur la plaque de fond (12), une fritte supérieure (16), qui est fixée sur la partie inférieure d'un couvercle, la plaque de fond (12) ou le couvercle étant conformé(e) en piston mobile (4), dans laquelle :
la colonne chromatographique à basse pression (1) présente à l'extérieur trois éléments commandés (5) pour lever ou baisser le piston (4), qui sont raccordés au piston (4),
les éléments commandés (5) sont équipés de transmetteurs de signaux (6) pour déterminer la position verticale et la position horizontale du piston (4), et
les transmetteurs de signaux (6) sont connectés électriquement à une unité de commande (10) pour les éléments commandés.

2. Colonne chromatographique à basse pression selon la revendication 1, caractérisée en ce que les éléments (5) servant à lever ou à baisser le piston (4) sont des cylindres hydrauliques.

3. Colonne chromatographique à basse pression selon la revendication 1, caractérisée en ce que les éléments (5) servant à lever ou baisser le piston (4) sont des cylindres pneumatiques.

4. Colonne chromatographique à basse pression selon la revendication 1, caractérisée en ce que les éléments (5) servant à lever ou baisser le piston (4) sont des broches filetées qui peuvent être commandées par un moteur électrique.

5. Colonne chromatographique à basse pression selon l'une quelconque des revendications 2 à 4, caractérisée en ce que les transmetteurs de signaux (6) sont des capteurs de déplacement.

6. Colonne chromatographique à basse pression selon la revendication 1, caractérisée en ce que la colonne chromatographique à basse pression (1) est équipée d'un détecteur de pression (18) pour déterminer la pression dans le cylindre (13) et en ce que ce détecteur de pression (18) est connecté électriquement à l'unité de commande (10).

7. Colonne chromatographique à basse pression selon la revendication 1, caractérisée en ce que le piston (4) est équipé d'un dispositif d'observation (20).

8. Utilisation d'une colonne chromatographique à basse pression selon la revendication 1 pour épurer l'insuline ou ses précurseurs.
